# EUROPEAN PATENT APPLICATION

(11) **EP 4 636 909 A1**
(43) Date of publication of application: **22.10.2025**
(21) Application number: 24170933.6
(22) Date of filing: 18.04.2024
(51) Int. Cl.: H01M 10/647, H01M 10/04, H01M 10/6556, H01M 50/224, H01M 50/271, H01M 50/30, H01M 50/209

(54) **BATTERY MODULE AND METHOD OF MANUFACTURING THE SAME**

(71) Applicant: Samsung SDI Co., Ltd., Yongin-si, Gyeonggi-do 17084 (KR)
(72) Inventor: Bloder, Martin, 8261 Sinabelkirchen (AT)
(74) Representative: Gulde & Partner

(57) **Abstract**

A battery pack (100) comprises a plurality of battery cells, and a housing comprising a bottom member, a plurality of side walls (22, 23, 24,25) and a top member, wherein the bottom member, the plurality of side walls and the top member form an interior accommodation space accommodating the plurality of battery cells, wherein at least one among the plurality side walls, the top member and the bottom member are formed by a plurality of metal sheets (41, 41', 41"; 42; 44, 44', 44") which are roll bonded to each other, wherein at least one cooling channel (40) is formed between bonding areas of the plurality of metal sheets, and wherein at least one crash channel (45) is formed between bonding areas of the plurality of the metal sheets.

## Description

### Field of the Disclosure

The present disclosure relates to a battery module and a method of manufacturing the battery module. In addition, the present disclosure relates to a battery system including the battery module and a vehicle including the battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/dissipating heat from the cells is required.

Current battery modules either consist of solid structures which need additional cooling plates or are formed by extruded profiles both for the supporting frame as well as for the coolant channels.

However, battery modules which incorporate additional cooling plates into the battery module have an increased number of parts to be assembled. This implies that the assembly effort is increased such that the manufacturing of the battery modules requires additional assembly effort.

Battery modules which are produced through extruded profiles to build the frame and to incorporate the cooling channels therein requires complicated frame assembly operations. In addition, extruded profiles have inflexible cooling channel design limitations with generally rather limited cooling performance.

In both cases manufacturing costs are relatively high so that a reduction of costs is desirable with respect to the mentioned battery modules. In addition, more flexible cooling channel designs may be desired to improve the cooling performance of battery modules. Further, upper parts of the battery cells are regularly subject to overheating where for example, the electrode terminals, busbar connections or wirings are located. Current battery modules and manufacturing methods often entirely avoid cell top covers for busbar cooling or for battery cell cooling. Other known methods provide incorporated cooler top members that are manufactured to the final dimensions prior to the fixation to a module frame.

However, battery modules according to the state of the art without any top cooling cover cannot provide fast charging due to heat development and low thermal propagation characteristics can be achieved. Furthermore, battery modules that use a more or less open busbar architecture are also prone to arcing and thermal propagation due to the electrically conductive deposits from battery cells in thermal runaway.

On the other hand, battery modules according to the state of the art that use fully premanufactured top cooler covers struggle with inevitably varying heights of the individual cells and the surrounding frame. Such height variations may lead to uneven pressure and nonuniform cooling of the battery cells. This in turn reduces the overall performance and lifetime of the battery module or the system which uses the battery modules.

### Summary of Invention

The invention is defined by the appended claims.

The description that follows is subjected to this limitation. Any disclosure lying outside the scope of said claims is only intended for illustrative as well as comparative purposes.

According to one aspect of the present disclosure, a battery module is provided. The battery module includes a plurality of battery cells and a frame including a bottom member, a plurality of side walls and top flap portions, wherein the bottom member, the plurality of side walls and the least two top flap portions form an interior accommodation space accommodating the plurality of battery cells. At least two side walls opposite from each other among the plurality of side walls are bent and extended from the bottom member. The at least two top flap portions are bent and extended from the at least two side walls to extend towards each other. The at least two side walls, the at least two top flap portions and the bottom member are formed by a plate including a first metal sheet on an inner side of the plate and a second metal sheet on an outer side of the plate which are roll bonded to each other. The plate further includes at least one cooling channel formed in at least one of the at least two side walls, the at least two top flap portions and the bottom member between bonding areas of the first metal sheet and the second metal sheet.

According to another aspect of the present disclosure, a method of manufacturing a battery module is provided. The method includes the steps of a) providing a plate by roll-bonding a first metal sheet with a second metal sheet. The method further includes the step of bending b) the plate so that at least two side walls opposite from each other are bent and extended from a bottom member and bending the plate so that at least two top flap portions opposite from each other are bent and extended from the at least two side walls to extend towards each other. The method includes the step of c) providing or inserting a plurality of battery cells in an accommodation space formed at least by the bottom member, the at least two side walls and the at least two top flap portions. The method further includes the d) inflating of the plate such that at least one cooling channel is formed in at least one of the least two side walls, the at least two top flap portions and the bottom member between bonding areas of the first metal sheet and the second metal sheet.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 illustrates a schematic perspective view of a battery module after inflating the top flap portions according to an embodiment,
FIG. 2 illustrates a schematic side view of the battery module after inflating the top flap portions according to an embodiment,
FIG. 3 illustrates a schematic perspective view of a battery module before inflating the top flap portions according to an embodiment,
FIG. 4 illustrates a schematic side view of the battery module before after inflating the top flap portions according to an embodiment, and
FIG. 5 schematically illustrates a method of manufacturing a battery module according to an embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery module is provided. The battery module includes a plurality of battery cells and a frame including a bottom member, a plurality of side walls and top flap portions, wherein the bottom member, the plurality of side walls and the least two top flap portions form an interior accommodation space in which the plurality of battery cells is accommodated. At least two side walls opposite from each other among the plurality of side walls are bent and extended from the bottom member. The at least two top flap portions are bent and extended from the at least two side walls to extend towards each other. The at least two side walls, the at least two top flap portions and the bottom member are formed by a plate including a first metal sheet on an inner side of the plate and a second metal sheet on an outer side of the plate which are roll bonded to each other. The plate further includes at least one cooling channel formed in at least one of the at least two side walls, the at least two top flap portions and the bottom member between bonding areas where the first metal sheet and the second metal sheet are roll-bonded.

The side walls together with the bottom member and also the top flap portions constitute a frame which is in other words a case or casing. The roll bonding refers to particular form of connecting or bonding metal sheets with each other. In practice, two metal sheets are passed through a pair of flat rollers exposed to sufficient pressure to bond the metal sheets. The pressure is set high enough to deform the metals and reduce the combined thickness. The formation of the cooling channels by inflating may be provided by coating (with release agent or separation agent) a desired cooling channel layout on one among the metal sheets according to the desired cooling cannels to be formed. Then, only the bare or uncoated metal surfaces bond in the roll bonding process. These areas refer to the bonding areas. The un-bonded parts corresponding to the cooling channel layout are inflated, for example, through pressure and/or heating so that cooling channels can be formed in the plate. For the inflating, for example, a pressure generating device like a pump, a compressor or other sources that can cause high fluid pressure may be connected to an end, e.g. a port, of the to-be inflated cooling channel, i.e. the unbonded areas, so that a fluid pressure, for example for air or coolant, causes inflation to form the at least one cooling channel. A limitation of the inflation can be achieved by the battery cells in a state where the battery cells are installed so that the inflation of the respective channel adapts and thus compensates the tolerances of the battery cells. In alternative or in addition, to reach a determined shape for the at least one cooling channel or the at least one crash channel, a contour defining member may be provided which limits extension for the inflation and provides a defined shape. In order to connect the to-be-inflated cooling channel to the pressurized medium, a welded, soldered or otherwise very well-connected connection to the respective channel may be an advantage. For to improve the connections, a hose sleeve or a pipe may be directly welded to the channel that is to be inflated. The metals of the first metal sheet and the second metal sheet may be the same metal or different metal. The roll-bonding thus allows to integrate cooling channels directly in the top cover member. On the inner side may mean the side directed to the accommodation space or the battery cells. On the outer side may mean the side directed away from the accommodation space or the battery cells. A top flap portion may also be referred to as top flap or top portion.

Due to the double bending process on each side, the roll bonded sheet metal is converted into a frame. The frame may have a C-shape from a single piece plate. Incorporating suitably designed cooling channels on the bottom member, top flap and/or the side walls can be manufactured at low costs providing integrated cooling and a good thermal propagation performance due to the reduced thermal distance and since the cooling channel layout can be optimized. Further, by extending the plate to the top of the battery module, the busbars as well as the cell top can be cooled with the same piece. Thus, a significant reduction of manufacturing effort and cost reduction can be achieved.

According to an embodiment, the at least one cooling channel includes at least one top cooling channel that is formed in at least one of the two top flap portions, wherein the at least two top flap portions are configured to elastically press the first metal sheet against the plurality of battery cells by inflating the at least two top flap portions for forming the at least one cooling channel. Thus, it is possible to create a gap-free mechanical fixture with lasting pre-tension that ensures both the best possible transfer of heat to the top flap portion together with the integrated cooling function. The pre-tension can be achieved by performing the inflating after the cell assembly, that is at least the battery cells and optionally busbars, sensors, busbar covers and/or cell vent cover is integrated into the roll-bonded frame, before inflating the top flap portions. Thus, height tolerances of the battery cells can be compensated by achieving a uniform mechanical pressure with improved thermal conductivity. In detail, each of the battery cells despite of having different heights has a press contact with the top flap portions since the inflation balances such height differences. A self-setting of the thermal contacts is thus achieved over the tops of the plurality of battery cells.

According to an embodiment, the at least one top cooling channel is arranged to overlap with electrode terminals of the plurality of battery cells and top flap portion is configured to elastically press the first metal sheet against the electrode terminals of the plurality of battery cells by inflating of the plate to form the at least one top cooling channel. Thus, top cooling channels in the top flap portions are pressed directly onto the electrode terminals, where wirings and busbars may be connected. Thus, heat transfer performance is increased by selectively locating and pressing the top cooling channel onto the electrode terminal region to reduce the thermal distance and to increase cooling performance.

According to an embodiment, the battery module further includes a cell vent cover including vents formed on the plurality of battery cells. The battery module includes a gap formed between the two top flap portions extending towards each other, wherein the gap overlaps with the cell vent cover and/or the vents. The vents may be referred to as safety vents. Thus, due the formed gap being located to overlap hot venting gases can be easily escaped via the gap despite of the presence of the two top flap portion and the integrated cooling channels therein. Thus, by simply sparing a gap, a venting function is provided while allowing a cooling function from the top and while no additional venting openings are needed.

According to an embodiment, the at least one cooling channel is formed to overlap with the cell vent cover and the two opposing top flap portions are configured to elastically press the first metal sheet against at least a portion of the cell vent cover to fix the cell vent cover. This fixing is caused by the inflating of the top cover member to form the top cooling channel and the resulting pre-tension. Thus, the cell vent cover is held in place by the liquid cooled sheet metal, so that the thermal propagation characteristics are superior to current state of the art developments. Thus, the cooling channels of the top flap portions are configured to press onto, and thereby fix, the cell vent cover. This also further improves the thermal propagation performance. For example, the top cooling channels and the press contacts of the first metal sheets caused by inflation are located so to fixate the cell vent cover which reduces the amount of assembly requirements and fixation.

According to an embodiment, the two opposing top flap portions are configured to elastically press the first metal sheet against an edge portion of the cell vent cover. Thus, the fixation of the cell vent cover is improved while the venting capability in a centre of the cell vent cover is maintained. This further improves thermal propagation performance.

According to an embodiment, the electrode terminals and the venting cover are separated from each other by the at least one top cooling channel. Since at least one top cooling channel presses on the battery cell, it can be used as a sealing that prevents hot gases to enter the electrode terminal area. In other words, the space in which the terminal electrodes are located and the space in which the venting cover is located is sealed with respect to each other.

According to an embodiment, the two opposing top flap portions include a cross section profile with stepped portions between a flap tip portion and a peripheral portion, the flap top portion being inwardly displaced with respect to the peripheral portion. Inwardly displaced may mean to be displaced in direction of the battery cells or the bottom member or to have a creasing contour. This pre-configuration of the two flap portions including the stepped portion takes into account the height difference between the peripheral region where the electrode terminals, busbars and/or wirings are located and the central region, where only a comparably flat cell vent cover is provided. Thus, the stepped portion assists in reducing the amount of inflating needed in the central region to establish the press contact with the battery cells. Thus, the distance of the top flap portion to the battery cells due to the pre-formed stepped portion is reduced and made more homogenous as the contour of top flap portions including the stepped portion resembles the contour of the battery cell.

According to another aspect of the present disclosure, a method of manufacturing a battery module is provided. The method includes the steps of a) providing a plate by roll-bonding a first metal sheet with a second metal sheet. The method further includes the step of bending b) the plate so that at least two side walls opposite from each other are bent and extended from a bottom member and so that at least two top flap portions opposite from each other are bent and extended from the at least two side walls to extend towards each other. The method includes the step of c) providing and/or inserting a plurality of battery cells in an accommodation space formed at least by the bottom member, the at least two side walls and the at least two top flap portions. The method further includes the d) inflating of the plate such that at least one cooling channel is formed between bonding areas of the first metal sheet and the second metal sheet.

According to an embodiment, at least one bottom cooling channel on the bottom member and/or at least one side cooling channel on the side wall is formed by the inflating. In this case, the step of inflating for the at least one bottom cooling channel and/or at least one side cooling channel is performed before the step of installing the battery cells and/or the cell assembly. In this case, the step of inflating may be performed against an auxiliary barrier. This may ensure homogeneous and equally expanded channels size. The auxiliary barrier may be removed after the inflating. Otherwise, i.e. in a case without this order, it would be possible e.g. that left/right/top and bottom channels become inflated differently and thus would consume a different volume.

According to an embodiment, the at least one cooling channel includes at least one top cooling channel formed in at least one of the two top flap portions and the method includes the step of inflating, after the plurality of battery cells are provided or installed in the accommodation space formed at least by the bottom member, the side walls and the top flap portions to elastically press the first metal sheet against the plurality of battery cells for forming the at least one top cooling channel between bonding areas where the first metal sheet and the second metal sheet are roll-bonded. Thus, it is possible to create a gap-free mechanical fixture with lasting pre-tension that ensures both the best possible transfer of heat to the top flap portion together with the integrated cooling function. The pre-tension can be achieved by performing the inflating after the cell assembly, that is at least the battery cells and optionally busbars, sensors, busbar covers and/or cell vent cover are integrated into the roll-bonded frame before inflating the top flap portions. Thus, height tolerances of the battery cells can be compensated by achieving a uniform mechanical pressure with improved thermal conductivity. In detail, each of the battery cells despite of having different heights has a press contact with the top flap portions since the inflation balances such height differences. A self-setting of the thermal contact is thus achieved.

According to an embodiment, the method of manufacturing a battery module includes the providing a cell vent cover with a plurality of venting valves formed on the plurality of battery cells. The extending the two top flap portions towards each other so that a gap is formed which overlaps with the venting valves.

According to an embodiment, the method of manufacturing a battery module, two top flap portions include a cross section profile including an inwardly bent portion at least in a flap end region of the two top flap portions that is arched towards the plurality of battery cells in a state prior to inflating, wherein the method includes the step of inflating includes straightening of the inwardly bent portion of the second metal sheet to a straight portion by elastically pressing the first metal sheet against the battery cells to form the at least one cooling channel in the fixed state. By pre-forming the top flap portion including the curved down arc prior to inflating which is then straightened due to contact of the first metal sheet with the battery cell in the inflation an improved, a good mechanical pressure against the battery cell can be achieved as result of the initially inwardly bent shape. The use of the inwardly bent portion ensures an improved mechanical pressure over the lifetime.

According to another aspect of the disclosure, a battery system including the battery module is provided. The above mentioned advantages also apply to the battery system.

According to another aspect of the disclosure, a vehicle including the battery system is provided.

According to an embodiment, the first metal sheet has a first thickness less than a second thickness of the second metal sheet. For example but not restricted thereto, the first thickness may be between 0,5 - 2 mm. For example but not restricted thereto, the second thickness may be between 3 - 5 mm. Thus, the second metal sheet may provide structural integrity to the top cover member by thickness while the first thinner metal sheet may be suitable for the cooling channel generation by inflation due to the reduced thickness.

According to an embodiment, the first metal sheet and the second metal sheet include different metals and/or different metal alloys. Thus, the inner side of the top cover member and the outer side of the top cover member can be separately designed according to a required functionality needed. For example, the inner side may need to have higher heat conductivity as it is closer to the heat generating battery cells while the outer side of the top cover member may require more structural robustness to prevent deformation. Thus, the roll bonding can be used to tailor the top cover member for the specific technical needs.

According to an embodiment, the first metal sheet includes aluminum or an aluminum alloy and the second metal sheet includes a steel or a metal matrix composite. Steel can be produced on large scale and is thus better for large scale production of battery units. The metal matrix composite may include fibers or particles dispersed in the metallic matrix.

According to an embodiment, the first metal sheet has a thermal conductivity higher than the thermal conductivity of the second metal sheet. Thus, the inner first metal sheet may act as heat conductor that transports heat away while proving as well the cooling channels.

According to an embodiment, additive particles are used in the roll-bonding. Thus, bonding may be strengthened to reinforce the frame while reducing the risk of delamination. For example, metallic particles or ceramic particles may be added during the roll bonding.

The additional features as mentioned in the context of describing embodiments with respect to the battery module can be combined with the above-described method resulting in the same advantageous effects as described above.

### Specific Embodiments

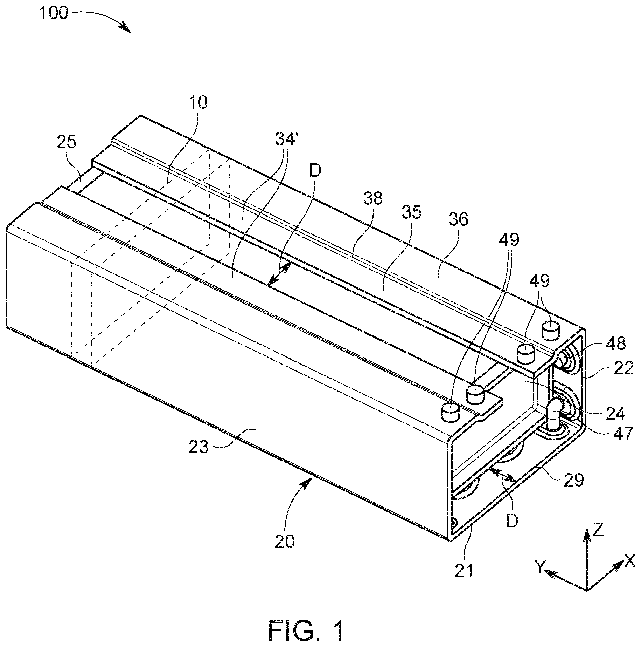

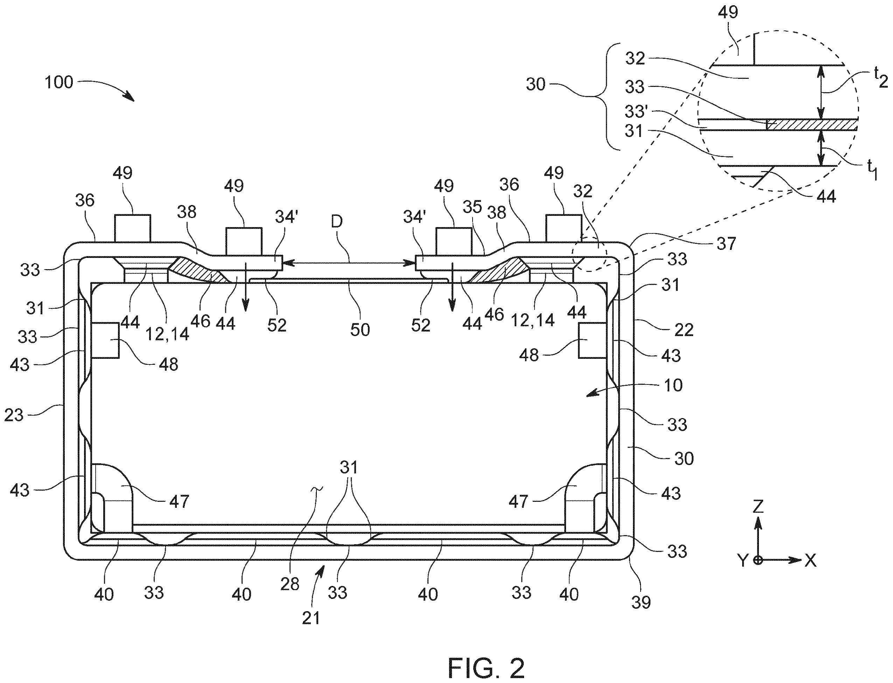

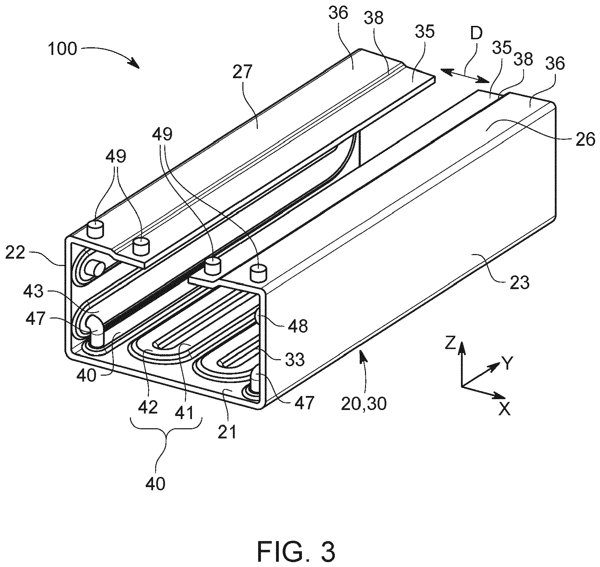

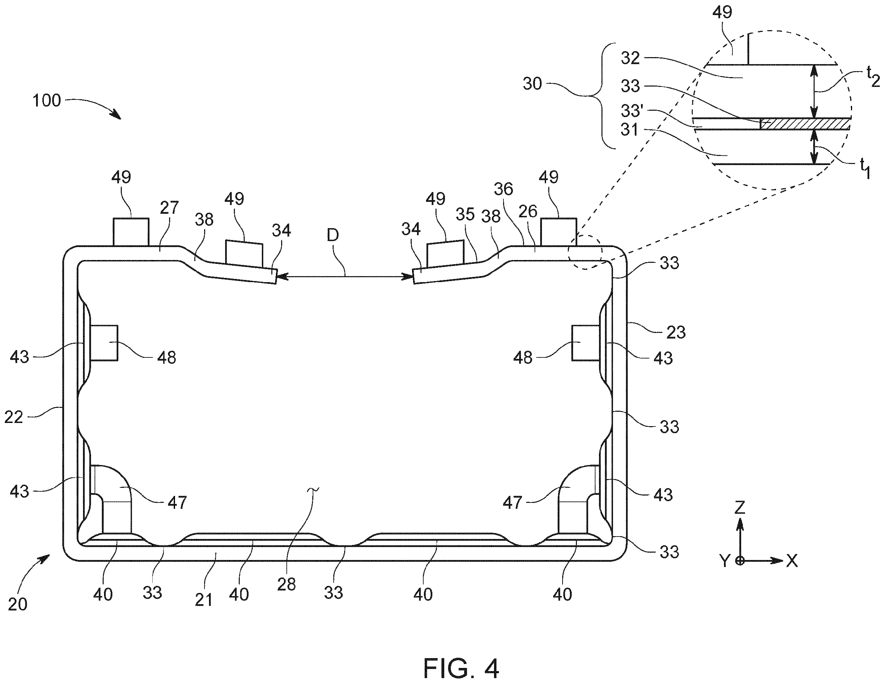

FIGs. 1 to 4 show a battery module 100, according to various embodiments of the invention. FIGs. 1 and 2 show a schematic perspective view and a side view, i.e. in a y-direction, of a battery module 100 in a state after inflating of the top flap portions 26, 27 including the battery cells 10. FIGs. 3 and 4 show a schematic perspective view and a side view, i.e. in the y-direction, of a battery module 100 in a state before inflation of the top flap portions 26, 27 without the battery cells 10. In the following, the battery module 100 will be described with reference to the various FIGs. 1 to 4.

Referring now to FIGs. 1 to 2, the battery module 100 includes a plurality of battery cells 10. The battery cells 10 may each include a first electrode terminal 12 and a second electrode terminal 14 with opposite polarity. The first electrode terminal 12 and the second electrode terminal 14 may be provided on a top surface of the battery cells 10. The electrode terminals 12, 14 are schematically shown in FIG. 2 in the side view. Further, the battery cells 10 may be interconnected (not shown) in a suitable manner. For example, busbars may be provided and connected with the battery cells 10 and the electrode terminals 12, 14 thereof. The plurality of battery cells 10 in the battery module 100 may be stacked together to form a battery cell stack. The battery cells 10 may be prismatic battery cells but the invention is not restricted thereto.

The battery module 100 further includes a frame 20. The frame 20 surrounds and supports the plurality of battery cells 10 of the battery module 100. The frame 20 includes a bottom member 21 and a plurality of side walls 22, 23, 24, 25 and least two top flap portions 26, 27 as indicated in the respective FIGs. 1 to 4. The bottom member 21, the plurality of side walls 22, 23, 24, 25 and the least two top flap portions 26, 27 form an internal accommodation space 28 in which the plurality of battery cells 10 is accommodated.

The battery module 100, two opposite side walls 22, 23 among the plurality of side walls 22, 23, 24, 25 are bent and extended from the bottom member 21. The opposite side walls 22, 23 may extend in perpendicular direction with respect to the bottom member 21.

Further, the at least two top flap portions 26, 27 are respectively bent and extended from the at least two side walls 22, 23. The two top flap portions 26, 27 as indicated in the FIGs. 1 - 4 form a top portion. The at least two top flap portions 26, 27 are extending towards each other. The at least two top flap portions 26, 27 may extend parallel to the bottom member 21. Thus, a C-formed portion of the frame 20 can be provided by a double bending process. Thus, alone with bending, the manufacturing costs can be reduced and the frame 20 can be easily produced.

The at least two side walls 22, 23, the at least two top flap portions 26, 27 and the bottom member 21 are formed by a plate 30. The plate 30 is twice bent and extended as described above on the two sides. The plate 30 further includes a first metal sheet 31 on an inner side of the plate 30. Further, the plate 30 includes a second metal sheet 32 on an outer side of the plate 30. The first metal sheet 31 and the second metal sheet 32 are roll bonded with each other.

The plate 30 further includes at least one cooling channel 40, 43, 44 in at least one of the at least two side walls 22, 23, the at least two top flap portions 26, 27 and/or the bottom member 21. The at least one cooling channel 40, 43, 44 may be formed by inflation of the plate 30, e.g., by applying pressure to the unbonded areas 33'. That is, cooling channels 40, 43, 44 can be formed in unbonded areas 33' between bonding areas 33 where the first metal sheet 31 and the second metal sheet 32 are roll-bonded to each other.

As shown in FIGs. 1 to 4, as an example, bottom cooling channels 40 are provided in the bottom member 21. In an example, the bottom cooling channels 40 may include a plurality of parallel extending straight portions 41 connected to each other by curved cooling end portions 42. The curved end portions 42 may be formed at ends of the bottom cooling channel 40. Furthermore, side cooling channels 43 are provided in the side walls 22, 23 of the frame 20. The bottom cooling channels 40 and the side cooling channels 43 may be connected with each other by a side connection portion 47. The side cooling channels 43 may be formed having the same shape as the bottom cooling channels 40.

In FIGs. 3 and 4 the top flap portions 26, 27 are still bare and do not include any top cooling channels in a state before inflation while FIGs. 1 and 2 show a battery module 100 including top cooling channels 44 in a state after inflation of the top flap portions 26, 27.

Thus, the roll bonding allows for a direct integration of cooling functions within the frame 20 providing a good thermal propagation performance. In any of the at least two side walls 24, 26, the at least two top flap portions 26, 27 and the bottom member 21 cooling channels 40, 43, 44 may be formed in the frame 20 according to various embodiments.

As shown in the embodiment of FIGs. 1 and 2, the at least two top flap portions 26, 27 include an integrated cooling function. This enables the battery module 100 to effectively cool the plurality of battery cells 10 from the top side.

Referring to FIGs. 1 and 2, the top cooling channels 44 are formed by inflating the top flap portions 26, 27. The inflating may be performed in a state where the plurality of battery cells 10 are inserted and/or installed in the accommodation space 28.

Thus, as shown in the example of FIGs. 3 and 4 where the battery cells 10 are not yet included, only the side cooling channels 43 and/or bottom cooling channels 40 are formed while in the top flap portions 26, 27 no top cooling channels 44 are included at this stage.

As illustrated in FIGs. 3 and 4, the top flap portions 26, 27 are suitably pre-formed or prepared to provide the designated top cooling channels 44. Further, the flap portions 26, 27 can provide a uniform contact pressure on the plurality of battery cells 10 as will be explained further below. The flap portions 26, 27 in the state shown in FIGs. 3 and 4 may include a coated cooling channel layout (not explicitly shown) at which unbonded areas 33' are provided for forming the top cooling channels 44, and/or other cooling channels, by inflating.

Due to the inflation of the unbonded areas 33' between bonded areas 33 where the first metal sheet 31 and the second metal sheets 32 are roll-bonded, the first metal sheet 31 of the top flap portions 26, 27 elastically deforms and presses against the plurality of battery cells 10 while forming the top cooling channels 44. Thus, the top cooling channels 44 are formed by inflating while at the same time the top cooling channels 44, or more concrete the first metal sheet 31, exerts an elastic force onto the plurality of battery cells 10. Thus, as indicated in FIG. 2 by several arrows, the first metal sheet 31 presses on the battery cells 10 from a top direction in the final state. Thus, due to the elastic deformation of the top flap portions 26, 27 of the frame 20 until the battery cells 10 limit the expansion, an improved thermal propagation is provided in the inflated state.

Since the inflating is performed with the battery cells 10 in the frame 20, i.e., the performing the inflating occurs after a cell assembly including at least the battery cells 10 and optionally busbars, sensors, busbar covers and/or cell vent cover 50 being installed into the roll-bonded frame 20 before inflating the top flap portions 26, 27. Thus, height tolerances of the battery cells can be compensated by achieving a uniform mechanical pressure with improved thermal conductivity production height tolerances of the battery cells 10 are compensated and a uniform mechanical pressure is achieved in the inflated state. Thus, each of the battery cells 10 despite of having different heights has a reliable press contact with the top flap portions 26, 27 since the inflation can balance such height differences. Therefore, a self-setting of the thermal contact is achieved since the top cooling channels 44 are automatically adapting to the varying heights of the individual battery cells 10 including busbar covers and other members improving cooling performance from the top side direction.

Further, referring to FIGs. 3 and 4, the top flap portions 26, 27 includes a straight portion 34' on the outer side of the plate 30. The straight portion 34' is formed by inflating the pre-formed top flap portions 26, 27 to elastically press the first metal sheet 31 against the battery cells 10. That is, when viewing FIGs.3 and 4, the top flap portions 26, 27 in a state prior to the inflating includes a cross section profile with an inwardly bent portion 34. The inwardly bent portion 34 is located in a flat tip portion 35 and is inwardly bent towards the plurality of battery cells 10. Thus, due to the inwardly bent portion 34 used before inflating, the contact formed can easily have a lasting pre-tension that ensures both improved thermal conductance and vibration resistance in the final state after inflating.

In more detail, when referring to FIG. 2, the inwardly bent portion 34 after inflation of the top flap portions 26, 27 is straightened due to lifting of the second metal sheet 32 once the first metal sheet 31 contacts the battery cell 10 in the inflating process. For example, as shown in FIG. 2, the straight portion 34' extends parallel to the bottom member 21. The straightening is caused by elastically pressing the first metal sheet 31, that is deformed due to inflation in direction of the battery cells 10, against the battery cells 10 to form the top cooling channels 44.

Referring to FIGs. 1 to 2 in which the inflation for forming the top cooling channels 44 is already performed in the at least two top flap portions 26, 27. In the present example, two separate top cooling channels 44 are provided but the invention is not restricted thereto. For example, a single continuous top cooling channel 44 may be provided or multiple separate top cooling channels 44. A top connecting portion 46 is exemplarily indicated in FIG. 2 connecting two straight portions of the respective top cooling channel 44. Further, top cooling channel ports 49 are indicated on the outer side of the top flap portions 26, 27 from which coolant can be drained from the top cooling channels 44 or supplied thereto, respectively.

The at least two top flap portions 26, 27 elastically press the first metal sheet 31 against the plurality of battery cells 10. The elastic pressing contact is achieved by inflating the at least two top flap portions 26, 27 for forming the top cooling channels 44. Thus, a lasting pre-tension is provided that ensures both better heat transfer performance and vibration resistance.

As shown in FIGs. 1 and 2, the top cooling channel 44 is formed and positioned to overlap with electrode terminals 12, 14 of the plurality of battery cells 10. The at least two top flap portions 26, 27 are located to elastically press the first metal sheet 31 against the electrode terminals 12, 14 by the inflating of the at least two top flap portions 26, 27 to form the at least one top cooling channel 44. Thus, the thermal propagation performance is improved since heat of the terminal area of the battery cells 10, where the busbars or additional wiring are connected can be easily carried away.

The battery module 100 may further include a cell vent cover 50. The cell vent cover 50 disposed on the plurality of battery cells 10. The cell vent cover 50 is for example illustrated in FIG. 2. The cell vent cover 10 may allow releasing hot gases in a designated and safe manner to prevent high pressure and may protect neighboring battery cells 10 from the hot gases in such case. The cell vent cover 50 in this case may be a single cover that spans the entirety of the plurality of battery cells 10 but can also be individually provided for each battery cell 10. The cell vent cover 50 may surround or cover cell vents of the respective battery cells 10. For example, the cell vent (here not shown) may be centrally covered, i.e. surrounded, by the cell vent cover 50.

Referring to FIGs. 1 to 4, a gap D may be formed between the at least two top flap portions 26, 27 which extend towards each other. Thus, the gap D may be formed between the flap tip portions 35 of the two opposing top flap portions 26, 27. The gap D overlaps with the cell vent cover 50. Thus, due to the gap D formed between the two opposing top flap portions 26, 27, hot gases released by the cell vents through the cell vent cover 50 can directly pass the gap D to the exterior of the battery module 100. Thus a venting function is promoted while providing a cooling from the top side.

As shown in FIG. 2, the top cooling channels 44 are arranged to overlap with the cell vent cover 50 at least to a portion. As can be seen in FIG. 4, the least two top flap portions 26, 27 elastically press the first metal sheet 31 against at least a portion of the cell vent cover 50. Thereby, the cell vent cover 50 is fixed by the inflating of the least two top flap portions 26, 27 for forming the top cooling channel 44. Therefore, the cell vent cover 50 is fixated alone with least two top flap portions 26, 27 being inflated to form the top cooling channel 44. Thus, fixation is simplified and a good mechanical contact is reached that improves the thermal conductivity.

Referring to FIG. 2, the top flap portions 26, 27 elastically press the first metal sheet 31, i.e., the top cooling channel 44, against an edge portion 52 of the cell vent cover 50. Thus, the edge portion 52 is held fixed while the venting function in a central region is maintained. No additional fixation is required and thermal propagation performance to the top cooling channel 44 is enhanced.

Due to the press contact, in addition, the electrode terminals 12, 14 and the cell vent cover 50 are spatially separated, i.e. spatially sealed, from each other by each of the top cooling channels 44. This is as well illustrated in FIG. 4. Therefore, an additional sealing feature is implemented by the press contact of the first metal sheet 31 that prevents hot gases to enter the electrode terminal area.

Further, as illustrated in the FIGs. 1 to 4, the two opposing top flap portions 26, 27 include a cross section profile with stepped portions 38 between a flap tip portion 35 and a peripheral portion 36. The flap tip portion 35 is inwardly displaced with respect to the peripheral portion 36. The stepped portions 38 refers to a pre-configuration of the top flap portions 26, 27 that is adapted for the height difference between where the electrode terminals 12, 14 are located and the busbars are located compared to the flap tip portion 35. Thus, the stepped portion 38 assists to reduce the amount of inflating needed in the flap tip portion 35 to establish the press contact with the battery cell 10 or the cell vent cover 50.

The cooling channels 40, 43, 44 are disposed between bonding areas 33 where the first metal sheet 31 and the second metal sheet 32 are roll bonded to each other. An example of a bonding area 33 is illustrated in the enlarged inset in FIG. 2. That is, the cooling channels 40, 43, 44 are formed at unbonded areas 33'. The bonding areas 33 refer to the bonded interface between the two metal sheets 31, 32. A first thickness t1 of the first metal sheet 31 may be thinner than a second thickness t2 of the second metal sheet 32 and may improve thermal conductivity on the inner side while providing structural robustness on the outer side of the plate 30.

Referring to FIG. 2, bonding areas 33 may be formed in curved edges 37 between the side walls 22, 23 and the two top flap portions 26, 27. This stabilizes the upper portions of the frame 20 in the critical corner. This may be similarly performed for the curved edges 39 between the bottom member 21 and the side walls 22, 23.

Further, referring to FIG. 1, the plurality of side walls 22, 23, 24, 25 include two end plates 24, 25 opposite from each other. The end plates 24, 25 in this embodiment are separate from the plate 30 and fixed to the bottom member 21 and/or the two opposite side walls 22, 23. For example, the fixing may be performed by fixation techniques like welding, snap-fitting, bolting or riveting.

In this particular embodiment, one of the two end plates, here end plate 24, are positioned axially displaced inwards with respect to an end 29 of the bottom member 21. That means, as shown in FIG. 1, the end 29 of the bottom member 21 is distanced or indented inwards from the end 29 by a displacement distance d as shown in FIG. 3.

Further, the side connection portion 47 is formed between the inwardly displaced end plate 24 and the end 29 of the bottom member 21. Thus, the side cooling channels 43 and the bottom cooling channels 40 can be continuously connected within the frame 20 by making use of that the end plate 24 is separate from the plate 30 so that it can be axially displaced inwards. Further, side cooling channel ports 48 can be provided in the battery module 100 to allow the supply or the draining of coolant to and from the connected cooling channels 40, 43. For example, the side cooling channel ports 48 may be overlapping or positioned above the side connection portion 47 in the corner of the bottom member 21.

In an alternate embodiment, the end plates 24, 25 are bent and extended from the bottom member 21 or are formed by deep drawing. Thus, an additional fixation and manufacturing step can be avoided since an integral frame 20 including all side walls is generated. This reduces the amount of assembly and assembly parts since additional fixation is not required.

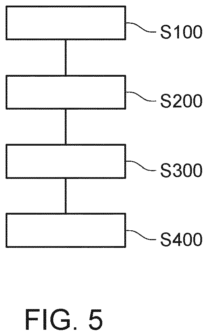

FIG. 5 shows a schematic embodiment of a method of manufacturing a battery module 100. The features of the method can also be obtained from the above description of the FIGs. 1 to 4 and are incorporated herein by reference.

The method includes the step of providing S100 a plate 30 by roll-bonding a first metal sheet 31 with a second metal sheet 32.

The method further includes the step of bending S200 the plate 30 so that at least two side walls 22, 23 opposite from each other are bent and extended from a bottom member 21 and that at least two top flap portions 26, 27 opposite from each other are bent and extended from the at least two side walls 22, 23 to extend towards each other. Therefore, a double bending is provided for each side wall 22, 23. The obtained geometry may refer to a C-shape. In an embodiment, the two upper top flap portions 26, 27 are bent and extended before the side walls 22, 23 are bent and extended. This makes the bending process easier as the bending process can be readily performed for a metal sheet since the bending location is only a shift in a plane which eases the production process and the positioning of bending devices.

The method further includes the step of inserting S300 a plurality of battery cells 10 in an accommodation space 28 formed at least by the bottom member 21, the at least two side walls 22, 23 and the at least two top flap portions 26, 27. The inserting of the battery cells 10 may include an installing of the battery cell assembly.

The method further includes the step of inflating S400 of the plate 30 such that at least one cooling channel 40, 43, 44 is formed in at least one of the at least two side walls 24, 26, the at least two top flap portions 26, 27 and the bottom member 21 between bonding areas 33 where the first metal sheet 31 and the second metal sheet 32 are roll bonded. For the inflating, for example, a pressure generating device like a pump, a compressor or other sources that can cause high fluid pressure may be connected to an end, e.g. a port, of the to-be inflated cooling channel, i.e. the unbonded areas, so that a fluid pressure, for example for air or coolant, causes inflation to form the at least one cooling channel 40, 43, 44. A limitation of the inflation can be achieved by the battery cells in a state where the battery cells 10 are installed so that the inflation of the respective channel adapts and thus compensates the tolerances of the battery cells 10. In alternative or in addition, to reach a determined shape for the at least one cooling channel 40, 43, 44, a contour defining member may be provided which limits extension for the inflation and provides a defined shape.. In order to connect the to-be-inflated cooling channel to the pressurized medium, a welded, soldered or otherwise very well-connected connection to the respective channel may be an advantage. For to improve the connections, a hose sleeve or a pipe may be directly welded to the channel that is to be inflated. Thus, an easy and cost-effective method is provided where cooling channels 40, 43, 44 can be directly integrated in one single piece. The timely order of the steps of inflating S300 and installing S400 can changed. For example, the timely order may depend on the side portion of where the inflation is performed.

In an embodiment, at least one bottom cooling channel 40 on the bottom member 21 and/or at least one side cooling channel 43 on the side wall 22, 23 is formed by inflating. In this case, the step of inflating S400 for the at least one bottom cooling channel 40 and/or at least one side cooling channel 43 is performed before the step of installing S400 the battery cells 10 and/or the cell assembly. In this case, the step of inflating may be performed against an auxiliary barrier. This may ensure homogeneous and equally expanded channels size. The auxiliary barrier may be removed after the inflating. Otherwise, i.e. in a case without this order, it would be possible e.g. that left/right/top and bottom channels 40, 43, 44 become inflated differently and thus would consume a different volume.

In another example, a top cooling channel 44 among the at least one cooling channel is formed in at least one of the two top flap portions 26, 27. In this case, the step of inflating S400 may be performed after the plurality of battery cells 10 are provided in the accommodation space 28 formed at least by the bottom member 21, the side walls 22, 23, 24, 25 the two top flap portions 26, 27 to elastically press the first metal sheet 31 against the plurality of battery cells 10 for forming at least one top cooling channel 44 between bonding areas 33 where the first metal sheet 31 and the second metal sheet 32 are roll bonded. Thus, a press contact can be provided since the inflating can be used to last an elastic force acting on the battery cell 10. In more detail, the inflated top flap portions 26, 27 of the roll-bonded frame 20 can expand until the battery cell 10, for example busbar covers, the cell top and/or cell vent cover, have limited the expansion of the top cooling channels 44. Due to the elastic deformation of the top flaps of the frame as well as the self-setting of the cooling channels onto the varied counter-surfaces, a superior thermal conductivity and lasting mechanical fixation of all parts are ensured.

The two top flap portions 26, 27 may include a cross section profile including an inwardly bent portion 34 at least in a flap tip portion 35 of the two top flap portions 26, 27. Thus, the step of inflating S400 includes straightening of the inwardly bent portion 34 of the second metal sheet 32 to a straight portion 34' by elastically pressing the first metal sheet 31 against the battery cells 10 to form the at least one top cooling channel 44. Thus, a lasting elastic tension can be provided that increases the thermal propagation and the vibration resistance. Further details can be derived from the description with respect to FIGs. 1 to 4.

In summary, a structurally improved battery module 100 that can be easily and with reduced costs manufactured. Embodiments provide an improved heat transfer performance over the entire battery cells 10 since the inflating of the top flap portions 26, 27 is performed after the battery cells 10 are included in the frame 20 so that production height tolerances of the battery cells 10 are compensated, uniform mechanical pressure and therefore superior thermal conductivity is achieved. In other words, a self-setting of the thermal contact is achieved since the top cooling channels 44 in the inflation are automatically adapting to the varying heights of the individual cells and busbars. Further embodiments allow for improvement of the heat transfer and venting properties of such a battery module 100.

### Reference signs

- 100: battery module

- 10: battery cell
- 12: first electrode terminal
- 14: second electrode terminal

- 20: frame/casing
- 21: bottom member
- 22, 23: side wall
- 24, 25: side wall / end plates
- 26, 27: top flap portion
- 28: accommodation space
- 29: end

- 30: plate
- 31: first metal sheet
- 32: second metal sheet
- 33: bonding area
- 33': unbonded area
- 34: inwardly bent portion
- 34': straight portion
- 35: flap tip portion
- 36: peripheral portion
- 37: curved edge
- 38: stepped portion
- 39: curved edge

- 40: bottom cooling channel
- 41: straight portion
- 42: curved cooling end portion
- 43: side cooling channel
- 44: top cooling channel
- 46: top connection portion
- 47: side connecting portion
- 48: side cooling channel port
- 49: top cooling channel port

- 50: cell vent cover
- 52: edge portion

- S100: providing a plate
- S200: bending the plate to form side walls and to form top flaps
- S300: inserting/installing the battery cells
- S400: inflating the plate

- D: gap
- d: displacement distance
- t1: first thickness
- t2: second thickness

## Claims

1. A battery module (100), comprising:
a plurality of battery cells (10), and
a frame (20) comprising a bottom member (21), a plurality of side walls (22, 23, 24, 25), at least two top flap portions (26, 27), wherein the bottom member (21), the plurality of side walls (22, 23, 24, 25) and the at least two top flap portions (26, 27) form an interior accommodation space (28) accommodating the plurality of battery cells (10),
wherein the at least two side walls (22, 23) opposite from each other among the plurality of side walls (22, 23, 24, 25) are bent and extended from the bottom member (21),
wherein the at least two top flap portions (26, 27) are respectively bent and extended from the at least two side walls (22, 23) to extend towards each other,
wherein the at least two side walls (22, 23), the at least two top flap portions (26, 27) and the bottom member (21) are formed by a plate (30) comprising a first metal sheet (31) on an inner side of the plate (30) and a second metal sheet (32) on an outer side of the plate (30) which are roll bonded to each other, and
wherein the plate (30) further comprises at least one cooling channel (40, 43, 44) in at least one of the at least two side walls (22, 23), the at least two top flap portions (26, 27) and the bottom member (21) formed between bonding areas (33) of the first metal sheet (31) and the second metal sheet (32).

2. The battery module (100) according to any of the preceding claim 1, wherein the at least one cooling channel (40, 43, 44) comprises at least one top cooling channel (44) formed in the at least two top flap portions (26, 27),
wherein the at least two top flap portions (26, 27) are configured to elastically press the first metal sheet (31) against the plurality of battery cells (10) by inflating the at least two top flap portions (26, 27) for forming at least one top cooling channel (44).

3. The battery module (100) according to claim 2, wherein the at least one cooling channel (40) is arranged to overlap with an electrode terminal (12, 14) of the plurality of battery cells (10) and the at least two top flap portions (26, 27) are configured to elastically press the first metal sheet (31) against the electrode terminal (12, 14) of the plurality of battery cells (10) by the inflating of the at least two top flap portions (26, 27) to form at least one top cooling channel (44).

4. The battery module (100) according to any of the preceding claims 2 to 3, further comprising:
a cell vent cover (50) disposed on the plurality of battery cells (10), and
a gap (D) formed between the at least two top flap portions (26, 27) extending towards each other, wherein the gap (D) overlaps with the cell vent cover (50).

5. The battery module (100) according to claim 4, wherein at least one top cooling channel (44) is arranged to overlap with the cell vent cover (50) and the at least two top flap portions (26, 27) are configured to elastically press the first metal sheet (31) against at least a portion of the cell vent cover (50) to fix the cell vent cover (50) by the inflating of at least two top flap portions (26, 27) for forming the at least one top cooling channel (44).

6. The battery module (100) according to claim 5, wherein the two opposing top flap portions (26, 27) are configured to elastically press the first metal sheet (31) against an edge portion (52) of the cell vent cover (50).

7. The battery module (100) according to claim 5 and 6, wherein the electrode terminal (12, 14) and the cell vent cover (50) are separated from each other at least one top cooling channel (44).

8. The battery module (100) according to any of the preceding claims 1 to 7, wherein the two opposing top flap portions (26, 27) comprise a cross section profile with stepped portions (38) between a flap tip portion (35) and a peripheral portion (36), the flap tip portion (35) being inwardly displaced with respect to the peripheral portion (36).

9. The battery module (100) according to any of the preceding claims 1 to 8, wherein bonding areas (33) are formed in curved edges (37) between the side walls (22, 23) and the at least two top flap portions (26, 27).

10. A method of manufacturing a battery module (100), wherein the method comprises the steps of:
a) providing (S100) a plate (30) by roll-bonding a first metal sheet (31) with a second metal sheet (32);
b) bending (S200) the plate (30) so that at least two side walls (22, 23) opposite from each other are bent and extended from a bottom member (21) and such that two top flap portions (26, 27) opposite from each other are bent and extended from the at least two side walls (22, 23) to extend towards each other;
c) inserting (S300) a plurality of battery cells (10) in an accommodation space (28) formed at least by the bottom member (21), the at least two side walls (22, 23) and the at least two top flap portions (26, 27); and
d) inflating (S400) of the plate (30) such that at least one cooling channel (40, 43, 44) is formed in at least one of the at least two side walls (22, 23), the at least two top flap portions (26, 27) and the bottom member (21) between bonding areas (33) of the first metal sheet (31) and the second metal sheet (32).

11. The method of manufacturing according to claim 10, wherein the at least one cooling channel (40, 43, 44) comprises at least one top cooling channel (44) formed in at least one of the two top flap portions (26, 27), wherein the inflating (S400) comprises:
inflating (S400), after the plurality of battery cells (10) are installed in the accommodation space (28) formed at least by the bottom member (21), the at least two top flap portions (26, 27) to elastically press the first metal sheet (31) against the plurality of battery cells (10) for forming at least one top cooling channel (44) between bonding areas (33) of the first metal sheet (31) and the second metal sheet (32).

12. The method according to any of the preceding claims 10 to 11, further comprising:
providing a cell vent cover (50) comprising venting valves formed on the plurality of battery cells (10), and
extending the two top flap portions (26, 27) towards each other so that a gap (D) is formed which overlaps with the cell vent cover (50).

13. The method according to any of the preceding claims 10 to 12, wherein two top flap portions (26, 27) comprise a cross section profile comprising an inwardly bent portion (34) of a flap tip portion (35) of the two top flap portions (26, 27) that is bent towards the plurality of battery cells (10) in a state prior to inflating, and
the step of inflating (S400) comprises straightening of inwardly bent portion (34) of the second metal sheet (32) to a straight portion (34') by elastically pressing the first metal sheet (31) against the battery cells (10) to form the at least one top cooling channel (44).

14. A battery system, comprising the battery module (100) according to any one of the preceding claims 1 to 9.

15. A vehicle comprising the battery system according to claim 14.

## Amended claims

### Amended claims in accordance with Rule 137(2) EPC.

1. A battery module (100), comprising:
a plurality of battery cells (10), and
a frame (20) comprising a bottom member (21), a plurality of side walls (22, 23, 24, 25), at least two top flap portions (26, 27), wherein the bottom member (21), the plurality of side walls (22, 23, 24, 25) and the at least two top flap portions (26, 27) form an interior accommodation space (28) accommodating the plurality of battery cells (10),
wherein the at least two side walls (22, 23) opposite from each other among the plurality of side walls (22, 23, 24, 25) are bent and extended from the bottom member (21),
wherein the at least two top flap portions (26, 27) are respectively bent and extended from the at least two side walls (22, 23) to extend towards each other,
wherein the at least two side walls (22, 23), the at least two top flap portions (26, 27) and the bottom member (21) are formed by a plate (30) comprising a first metal sheet (31) on an inner side of the plate (30) and a second metal sheet (32) on an outer side of the plate (30) which are roll bonded to each other, and
wherein the plate (30) further comprises at least one cooling channel (40, 43, 44) in at least one of the at least two side walls (22, 23), the at least two top flap portions (26, 27) and the bottom member (21) formed between bonding areas (33) of the first metal sheet (31) and the second metal sheet (32), wherein the at least one cooling channel (40, 43, 44) comprises at least one top cooling channel (44) formed in the at least two top flap portions (26, 27),
**characterized in that**,
wherein the at least two top flap portions (26, 27) are configured to elastically press the first metal sheet (31) against the plurality of battery cells (10) caused by inflating the at least two top flap portions (26, 27) for forming at least one top cooling channel (44).

2. The battery module (100) according to claim 1, wherein the at least one cooling channel (40) is arranged to overlap with an electrode terminal (12, 14) of the plurality of battery cells (10) and the at least two top flap portions (26, 27) are configured to elastically press the first metal sheet (31) against the electrode terminal (12, 14) of the plurality of battery cells (10) caused by the inflating of the at least two top flap portions (26, 27) to form at least one top cooling channel (44).

3. The battery module (100) according to any of the preceding claims 1 to 2, further comprising:
a cell vent cover (50) disposed on the plurality of battery cells (10), and
a gap (D) formed between the at least two top flap portions (26, 27) extending towards each other, wherein the gap (D) overlaps with the cell vent cover (50).

4. The battery module (100) according to claim 3, wherein at least one top cooling channel (44) is arranged to overlap with the cell vent cover (50) and the at least two top flap portions (26, 27) are configured to elastically press the first metal sheet (31) against at least a portion of the cell vent cover (50) to fix the cell vent cover (50) caused by the inflating of at least two top flap portions (26, 27) for forming the at least one top cooling channel (44).

5. The battery module (100) according to claim 4, wherein the two opposing top flap portions (26, 27) are configured to elastically press the first metal sheet (31) against an edge portion (52) of the cell vent cover (50).

6. The battery module (100) according to claim 4 and 5, wherein the electrode terminal (12, 14) and the cell vent cover (50) are separated from each other at least one top cooling channel (44).

7. The battery module (100) according to any of the preceding claims 1 to 6, wherein the two opposing top flap portions (26, 27) comprise a cross section profile with stepped portions (38) between a flap tip portion (35) and a peripheral portion (36), the flap tip portion (35) being inwardly displaced with respect to the peripheral portion (36).

8. The battery module (100) according to any of the preceding claims 1 to 7, wherein bonding areas (33) are formed in curved edges (37) between the side walls (22, 23) and the at least two top flap portions (26, 27).

9. A method of manufacturing a battery module (100), wherein the method comprises the steps of:
a) providing (S100) a plate (30) by roll-bonding a first metal sheet (31) with a second metal sheet (32);
b) bending (S200) the plate (30) so that at least two side walls (22, 23) opposite from each other are bent and extended from a bottom member (21) and such that two top flap portions (26, 27) opposite from each other are bent and extended from the at least two side walls (22, 23) to extend towards each other;
c) inserting (S300) a plurality of battery cells (10) in an accommodation space (28) formed at least by the bottom member (21), the at least two side walls (22, 23) and the at least two top flap portions (26, 27); and
d) inflating (S400) of the plate (30) such that at least one cooling channel (40, 43, 44) is formed in at least one of the at least two side walls (22, 23), the at least two top flap portions (26, 27) and the bottom member (21) between bonding areas (33) of the first metal sheet (31) and the second metal sheet (32),
wherein the at least one cooling channel (40, 43, 44) comprises at least one top cooling channel (44) formed in at least one of the two top flap portions (26, 27),
**characterized in that** the inflating (S400) comprises:
inflating (S400), after the plurality of battery cells (10) are installed in the accommodation space (28) formed at least by the bottom member (21), the at least two top flap portions (26, 27) to elastically press the first metal sheet (31) against the plurality of battery cells (10) for forming at least one top cooling channel (44) between bonding areas (33) of the first metal sheet (31) and the second metal sheet (32).

10. The method according to any of the preceding claims 8 to 9, further comprising:
providing a cell vent cover (50) comprising venting valves formed on the plurality of battery cells (10), and
extending the two top flap portions (26, 27) towards each other so that a gap (D) is formed which overlaps with the cell vent cover (50).

11. The method according to any of the preceding claims 8 to 10, wherein two top flap portions (26, 27) comprise a cross section profile comprising an inwardly bent portion (34) of a flap tip portion (35) of the two top flap portions (26, 27) that is bent towards the plurality of battery cells (10) in a state prior to inflating, and
the step of inflating (S400) comprises straightening of inwardly bent portion (34) of the second metal sheet (32) to a straight portion (34') by elastically pressing the first metal sheet (31) against the battery cells (10) to form the at least one top cooling channel (44).

12. A battery system, comprising the battery module (100) according to any one of the preceding claims 1 to 8.

13. A vehicle comprising the battery system according to claim 12.
